# NEW EUROPEAN PATENT SPECIFICATION

(11) **EP 1 920 652 B3**
(45) Date of publication of this specification: **21.12.2011**
(45) Mention of the grant of the patent: 01.07.2009
(21) Application number: 07075905.5
(22) Date of filing: 22.10.2007
(51) Int. Cl.: A01K 13/00, A01L 15/00

(54) **Equipment for cleansing and treatment of cow hooves**
Vorrichtung zur Reinigung und Behandlung von Rinderhufen
Équipement pour le nettoyage et le traitement de sabots de vaches

(30) Priority: 09.11.2006 NL 1032841
(43) Date of publication of application: 14.05.2008
(73) Proprietor: Vink, Gerrit Jan, 6661 NG Elst (NL)
(72) Inventor: Vink, Gerrit Jan, 6661 NG Elst (NL)

(56) References cited:
- EP-A- 1 099 373
- EP-A- 1 238 581
- WO-A-03/056918
- DE-U1- 29 808 877
- FR-A- 2 318 616

## Description

The invention is equipment for the automatic cleansing, disinfecting and treatment of cow hooves. Cows which have been kept in an open housing where the hooves are permanently in contact with liquid and organic manure, experience increasing problems with their hooves. In order to treat and prevent conditions such as, for example, Mortellaro, foot rot and foot warts, a disinfecting trough is often placed in the shed at a place where the cattle pass through regularly. This large and shallow trough, through which the cows walk, is filled with disinfectant. The disadvantages of this type of disinfecting troughs is that manure and dirt is often caked on the hooves of the cows so that the hoof only becomes moist and, in most cases, the disinfectant often does not reach the places which need to be treated. In addition to this, the trough is quickly contaminated by transfer of manure and dirt and due to the fact that the cattle defecate in the trough.
In addition to these disinfecting troughs, disinfecting mats are often used. These absorbing mats are soaked with disinfectant. The working is almost the same as the disinfecting tanks and the disadvantages are also the same. Another method of cleansing and disinfecting cow hooves is to spray the hooves directly. Equipment for this purpose is registered under the patent register DE 29808877 and EP 1099373A1. The disadvantage of this equipment is that it is complex and, therefore, expensive, it has a limited capacity and is difficult to install in existing stalls.
The objective of the invention is to supply equipment for which the disadvantages described above do not apply or where they apply to a lesser extent, which is simpler and therefore cheaper to produce than the cleansing and disinfecting equipment described above and which is also easier to install in an existing shed.

A disinfecting tray is used as narrow as possible and which is fitted with a raised section in the middle so that there are two channels: a right hand channel through which the cow wades with the right front and rear legs and one on the left through which the cow wades with the left front and rear legs. The raised mid-section can be made of a grate or may have a similar type of openings so that the manure which is produced when the animals wade through the tank does not fall into the wash-channels.

According to the invention the channels are also fitted with input and exit openings through which the water in the channels is forcibly pumped in order to produce a good cleansing and disinfecting effect. The advantages of this circulation of water through the channels compared to spraying the hooves is that the liquid has a strong current over the entire width and length of the channel with only a few water streams so that wherever the animal places its hooves, they are always in full contact with the fast-flowing liquid. In order to recycle the water, it is passed through a horizontal cylinder-shaped sieve for which the upper part is missing. A brush, which has a slightly larger diameter than the cylinder itself, revolves inside the cylinder so that the brush forcibly rubs against the inside of the cylinder and removes the dirt which has accumulated on the sieve openings to the edge of the upper part of the half cylinder. The elasticity of the nylon hairs of the rotating brush discharges the dirt out of the half cylinder.

Because the diameter of the rotating brush is slightly larger than the inside of the cylinder, the brush hairs will, when viewed from the front, be bent backwards slightly. After a while, this will have a negative effect on the elasticity of the nylon brush hairs. In order to solve this problem, once the rotating brush has stopped rotating, it will automatically rotate far enough in the opposite direction so that the brush hairs, when viewed from the front, are not bent backwards but forwards and, thereby, preserve their elasticity.

At an easily accessible place, a reservoir with liquid is situated. In this reservoir, the mixture of water with a cleansing agent, disinfecting agent or medication can be mixed. The reservoir is filled with an amount which is sufficient for a complete periodic treatment of, for example, three days. The reservoir is connected to the hoof cleansing tray by a hose in such a way that the tray can be filled with the mixture and, when the liquid surface falls below the required level, the liquid is automatically filled up.

The invention will be described in further detail below using a diagram consisting of drawings of a practical example of the use of the equipment according to the invention.
Fig. 1 displays the view of the equipment from above,
Fig. 2 displays a side-view of the equipment,
Fig. 3 displays the sieve from the right hand side after the rotating brush has been turned back 90 degrees.
Fig. 4 shows the sieve from the right hand side with the rotating brush in the normal rotation direction.

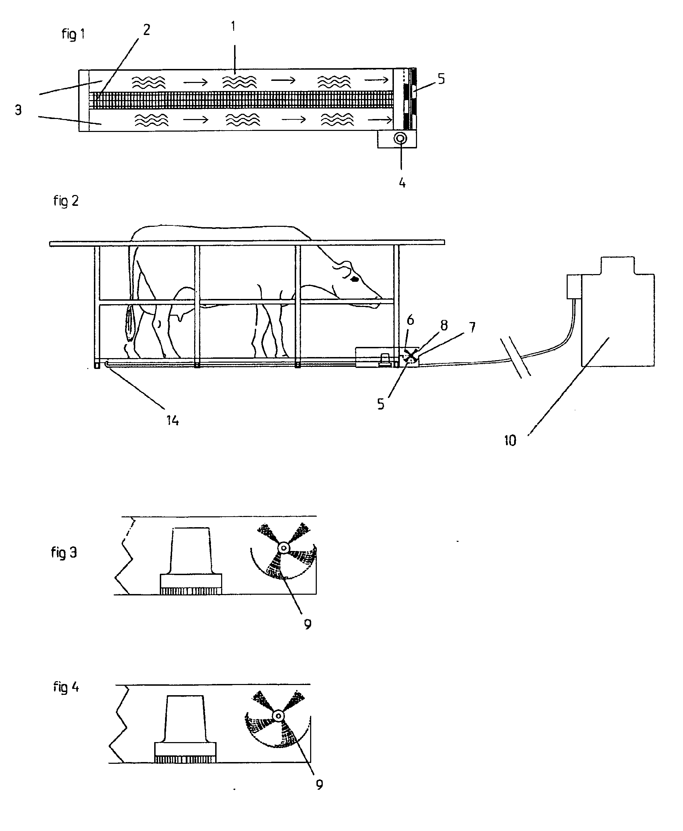

The equipment has a left and right hand wash-channel (3), through which the cow wades with the left and right legs, the raised mid-section (2) with the openings for letting through, collecting and removal of the manure. A pump (4) produces a jet of water in the wash-channels (3); these water jets are pumped forcibly through the wash-channels. The water is pumped through a horizontal sieve (5) in a half-cylinder form. The cylinder (5) has holes in it. The dirt which accumulates in front of the holes is removed upwards by the rotating brush (6). Because the brush has a slightly larger diameter than the cylinder, the brush hairs are bent backwards slightly (fig 4). When the brush hairs (9) reach the top of the cylinder (7), they spring back into an upright position causing the dirt to be thrown out of the open part of the cylinder (8). Once the brush has stopped rotating, it is then turned back so far in the opposite direction that the brush hairs, when looked at from the right, are bent to the right (fig. 3) so that the elasticity of the nylon brush hairs is not lost after a while.
Looking from the right hand side (fig 4), the brush hairs are bent to the left when dirt is expelled so that the discharge of dirt is carried out with extra power when it reaches the open part of the cylinder due to fact that the elasticity of the nylon hairs causes the brush hairs to regain their upright position.
An external supply tank with liquid is connected to the hoof cleansing equipment in such a way that it can be filled and, when the surface of the liquid in the tank falls under the required level, it can be re-filled.

## Claims

1. Equipment for cleansing and disinfecting cow and pig hooves, consisting of a disinfecting tray (1) which can be filled to such a level with cleansing and/or disinfecting liquid that when a cow walks through the tray, the cows hooves can be cleansed and /or disinfected where this tray (1) is as wide as the largest animal in the herd for which the tray is intended and the tray is fitted in the walking direction with a mid-section (2) raised just above the level of the liquid so that a channel (3) is created on both sides through which the cow wades with the right front and rear leg through the right-hand channel and with the left front and rear leg through the left-hand channel and where the top of the raised mid-section (2) may consist of a grate or may have some other type of openings **with the characteristic** that the liquid is pumped round in the tray (1) where the liquid flows in the length direction through the channels (3) so that a powerful liquid current is created which has a good cleansing effect on the hooves and where the same liquid is recycled to the pump or pumps (4) at the end of the drainage channel so that it can be reused.

2. Equipment according to claim 1 in which the liquid which is pumped around the tray is cleansed **with the characteristic** that this liquid is passed through a horizontal, half cylinder shaped sieve (5) in which a rotating brush (6) with a slightly larger diameter transports the dirt which accumulates on the sieve to the upper edge (7) of the half cylinder and where the brush hairs are bent backwards slightly when they are dragged along the inside of the half cylinder so that, due to their elasticity, they regain their upright position at the open part of the cylinder (8) and therefore eject the dirt through the open part (8).

3. Equipment according to claims 1 and 2, with the characteristic that once the rotating brush (6) has stopped turning, it is automatically rotated in the opposite direction at least so far that the nylon brush hairs (9) , due to the fact that they are dragged along the inside of the cylinder, slope to the right (fig 3) when viewed from the right hand side instead of, as is the case in the normal rotation direction, they slope to the left (fig. 4) so that the elasticity of the brush hairs is retained over a period of time.

4. Equipment according to claims 1, 2 and 3 with the characteristic that this equipment is fitted with an external fluid reservoir (10) in which the mixture of water and cleansing agent, disinfectant agent or medication is mixed and which is connected to the liquid-filled tray (1) in such a way that the tray can be filled and that when the level of the liquid falls below the desired level, this liquid is re-filled to the required level.

## Patentansprüche

1. Anlage für die Reinigung und Desinfektion von Kuh- und Schweineklauen, bestehend aus einer Desinfektionswanne (1), die bis zu einem entsprechenden Stand mit einer reinigenden und/oder desinfizierenden Flüssigkeit gefüllt werden kann, sodass, wenn eine Kuh durch diese Wanne läuft, die Kuhklauen **dadurch** gereinigt und/oder desinfiziert werden können und diese Wanne (1) so breit ist wie das größte Tier der Herde, für die die Wanne vorgesehen ist und die Wanne in Laufrichtung mit einem genau über dem Flüssigkeitsniveau erhöhten Mittelteil (2) ausgestattet ist, sodass an beiden Seiten eine Rinne (3) entsteht, wodurch die Kuh mit dem rechten Vorder- und Hinterbein durch die rechte Rinne und mit dem linken Vorder- und Hinterbein durch die linke Rinne watet und wobei die Oberseite des erhöhten Mittelteils (2) aus einem Gitter besteht oder sonstwie mit Öffnungen versehen ist **dadurch gekennzeichnet, dass** die Flüssigkeit in der Wanne (1) herumgepumpt wird, wobei die Flüssigkeit in Längsrichtung durch die Rinnen (3) gespült wird, sodass ein kräftiger Flüssigkeitsstrom entsteht, der auf die Klauen einen gründlich reinigenden Effekt hat und wobei dieselbe Flüssigkeit am Ende der Spülrinnen zurückgeleitet wird zur Pumpe oder zu den Pumpen (4), sodass diegleiche Flüssigkeit nochmals verwendet werden kann.

2. Anlage nach Schutzanspruch 1, wobei die in der Wanne herumgepumpte Flüssigkeit gereinigt wird, **dadurch gekennzeichnet dass** diese Flüssigkeit durch eine halbzylinderförmige angebrachte Siebanlage (5) geleitet wird, worin sich eine rotierende Bürste (6) mit einem entsprechend größeren Durchmesser befindet, die den sich auf dem Sieb sammelnden Schmutz zur Oberkante (7) des Halbzylinders transportiert und wobei die Bürstenhaare durch das Schleifen EP 1920652 entlang der Innenseite des Halbzylinders etwas nach hinten gebogen werden, sodass sie sich durch ihre Elastizität, wenn Sie bei dem offenen Teil des Zylinders (8) ankommen, wieder aufrichten und dabei den Schmutz durch den offenen Teil (8) herausschleudern.

3. Anlage nach Schutzanspruch 1 und 2 **dadurch gekennzeichnet, dass**, nachdem die rotierende Bürste (6) zum Stillstand gekommen ist, diese automatisch mindestens so weit in die entgegengesetzte Richtung rotiert, dass **dadurch** die Nylonfasern der Bürste (9) durch das Schleifen der Bürstenhaare entlang der Innenseite des Zylinders, von der rechten Seite aus gesehen sich nach rechts neigen (Abb. 3), anstatt, entsprechend der normalen Drehrichtung, sich nach links zu neigen (Abb. 4), sodass die Elastizität der Bürstenhaare auch langfristig erhalten bleibt.

4. Anlage nach Schutzanspruch 1, 2 und 3 4 **dadurch gekennzeichnet, dass** diese Anlage mit einem externen Flüssigkeitsreservoir (10), in dem die Mischung von Wasser und Reinigungs- oder Desinfektions- oder Arzneimittel angemacht wird und das solcherart mit der mit Flüssigkeit gefüllten Wanne (1) verbunden ist, dass die Wanne mit Flüssigkeit gefüllt werden kann und dass, falls der Flüssigkeitsstand unter das gewünschte Niveau sinkt, diese Flüssigkeit automatisch wieder bis auf das gewünschte Niveau aufgefüllt wird.

## Revendications

1. Dispositif pour le nettoyage et la désinfection des onglons de vaches et de porcs, se composant d'un bac de désinfection (1) pouvant être rempli d'un liquide nettoyant et / ou désinfectant jusqu'à un niveau tel que, lorsqu'une vache marche dans ce bac, ses onglons peuvent être nettoyés et / ou désinfectés et ce bac (1) est aussi large que l'animal le plus gros du troupeau auquel le bac est destiné et est doté, dans le sens de la marche, d'une partie centrale surélevée (2) juste au dessus du niveau du liquide, de façon que se forme, des deux côtés, une rigole (3) conduisant à ce que la vache marche dans la rigole droite avec la patte avant et la patte arrière droite et dans la rigole gauche avec la patte avant et la patte arrière gauche, sachant que le côté supérieur de la partie centrale surélevée (2) se compose d'une grille ou bien est muni d'ouvertures, **caractérisé en ce que** le liquide circule dans le bac (1) au moyen d'un système de pompage, conduisant à ce que le liquide soit entraîné dans le sens de la longueur au travers des rigoles (3), de façon que se forme un fort courant de liquide, exerçant un bon effet nettoyant sur les onglons et où ce même liquide, arrivé aux extrémités des rigoles, soit reconduit vers la pompe ou les pompes (4) afin que ce même liquide soit réutilisé.

2. Dispositif suivant les revendications 1, dans lequel le liquide pompé dans le bac est nettoyé, **caractérisé en ce que** ce liquide est dirigé vers un dispositif de tamis de forme demi-cyclindrique (5) contenant une brosse rotative (6) d'un diamètre légèrement plus important, qui transporte les résidus de salissures s'amassant sur le tamis, vers le rebord supérieur (7) du demi-cylindre et où les poils de la brosse sont légèrement recourbés vers l'arrière sous l'effet du glissement le long de la face interne du demi-cylindre, si bien qu'une fois arrivés à la partie ouverte du cylindre (8), les poils, du fait de leur élasticité, reprennent leur forme droite, rejetant ainsi par la partie ouverte du cylindre, les résidus de salissures vers l'extérieur

3. Dispositif suivant les revendications 1 et 2, **caractérisé en ce qu'**après l'immobilisation de la brosse rotative (6), celle-ci tourne automatiquement dans la direction inverse, au moins assez pour que les poils de nylon de la brosse (9), en raison du glissement des poils le long de la face interne du demi-cylindre, vus à partir du côté droit, se retrouvent dirigés vers la droite (fig. 3), au lieu de, comme dans le sens normal de rotation, se retrouver dirigés vers la gauche (fig. 4), ceci afin de conserver leur élasticité à long terme.

4. Dispositif suivant les revendications 1, 2, et 4, **caractérisé en ce que** ce dispositif est doté d'un réservoir externe de liquide (10), dans lequel la solution d'eau et de produit de nettoyage ou de désinfection ou le médicament est mélangée et communiquant de façon telle avec le bac rempli de liquide (1) que le bac puisse ainsi être rempli de liquide et que, lorsque la surface du liquide descend en dessous du niveau souhaité, ce liquide se remplisse à nouveau automatiquement jusqu'au niveau désiré.
